# EUROPEAN PATENT APPLICATION

(11) **EP 2 645 345 A1**
(43) Date of publication of application: **02.10.2013**
(21) Application number: 13157682.9
(22) Date of filing: 04.03.2013
(51) Int. Cl.: G08B 13/196, G08B 25/10

(54) **Monitoring apparatus**

(30) Priority: 30.03.2012 JP 2012081780
(71) Applicant: Funai Electric Co., Ltd., Daito-shi Osaka 574-0013 (JP)
(72) Inventor: Muraoka, Masaru, OSAKA, Osaka 574-0013 (JP)
(74) Representative: Brochard, Pascale

(57) **Abstract**

A monitoring apparatus includes an imaging unit that takes an image of a monitoring area, an intrusion detection sensor that detects intrusion into the monitoring area, and a display unit that displays a range that can be detected by the intrusion detection sensor overlaid on an image of the monitoring area taken by the imaging unit. The range that can be detected by the intrusion detection sensor in the monitoring area is less than or equal to an imaging range of the monitoring area that can be imaged by the imaging unit.

## Description

### [Technical Field]

The present invention relates to a monitoring apparatus, and in particular, a monitoring apparatus equipped with an imaging unit which takes images of a monitoring area and an intrusion detection sensor which detects intrusion in the monitoring area.

### [Background Art]

A conventional known monitoring apparatus is one equipped with an imaging unit which takes images of a monitoring area and an intrusion detection sensor which detects intrusion in the monitoring area (for example, refer to Patent Reference 1).

In the aforementioned Patent Reference 1, a digital camera (monitoring apparatus) equipped with an imaging means (imaging unit) and a person detection sensor (intrusion detection sensor) is disclosed. This digital camera is configured such that if the person detection sensor detects the approach of a person, the approaching person is imaged by the imaging means and displayed on a liquid crystal display, and the image data is also saved in the memory of the digital camera body. Therefore, it is possible to construct a simple security system using the monitoring operation of such a digital camera.

### [Patent References]

[Patent Reference 1] Japanese Unexamined Patent Application Publication No. 2001-36775

In the digital camera described in the aforementioned Patent Reference 1, it is disclosed that a person detected by a person detection sensor when the user is absent is recorded in the digital camera body. On the other hand, this type of monitoring operation assumes that the digital camera is appropriately installed in a prescribed location beforehand. In Patent Reference 1, however, there is no disclosure or suggestion regarding how to install the digital camera while checking or judging whether or not the installation situation is appropriate. For this reason, if the detection range of the person detection sensor cannot be checked when the digital camera is installed in a prescribed location, it cannot be easily checked whether or not the installation situation is appropriate for a monitoring apparatus. An accurate monitoring operation of the monitoring area cannot be performed by the monitoring apparatus if the detection range of the person detection sensor does not appropriately cover the monitoring area.

### [Summary of the Invention]

One or more embodiments of the present invention provide a monitoring apparatus by which it is possible to easily check whether or not the installation situation of the apparatus body is appropriate.

A monitoring apparatus according to one aspect of the present invention includes an imaging unit that takes an image of a monitoring area; an intrusion detection sensor that detects intrusion into the monitoring area; and a display unit that displays a range that can be detected by the intrusion detection sensor overlaid on an image of the monitoring area taken by the imaging unit, wherein the range that can be detected by the intrusion detection sensor in the monitoring area is less than or equal to an imaging range of the monitoring area that can be imaged by the imaging unit. Note that in the present invention, "image of monitoring area" is a broad concept which includes still images of the monitoring area taken by the imaging unit with prescribed timing and movie-format images (videos) of the monitoring area taken continuously by the imaging unit within a prescribed period (time range).

In a monitoring apparatus according to one aspect of the present invention, due to the fact that it comprises a display unit which displays the range that can be detected by the intrusion detection sensor overlaid on an image of the monitoring area taken by the imaging unit as described above, since the range that can be detected by the intrusion detection sensor is displayed overlaid on an image of the monitoring area on the display unit, the user (operator) can easily check whether or not the installation situation of the monitoring apparatus installed in a prescribed location is appropriate for performing the monitoring operation. Also, because the range that can be detected by the intrusion detection sensor in the monitoring area is of a size less than or equal to the imaging range of the monitoring area that can be imaged by the imaging unit as described above, the range that can be detected by the intrusion detection sensor can be displayed on the display unit reliably overlaid within the image without protruding from the image of the monitoring area taken by the imaging unit.

A monitoring apparatus according to one aspect is configured such that the range that can be detected by the intrusion detection sensor is displayed on the display unit overlaid on an image of the monitoring area taken by the imaging unit in a format that includes a shape and/or color that can be visually identified by an operator. By such a configuration, a user (operator) can accurately check the installation situation of the monitoring apparatus because the range that can be detected by the intrusion detection sensor is displayed on the display unit in a state where it is distinguished from the image of the monitoring area.

In a monitoring apparatus according to one aspect, the imaging unit, the intrusion detection sensor, and the display unit are arranged on a same side of the monitoring apparatus. By such a configuration, when an operator checks the installation situation of the monitoring apparatus, he can check while looking at the display unit on the side on which the imaging unit and intrusion detection sensor are arranged. That is, when the monitoring apparatus is installed in a small and inconspicuous location such as on a wall or in a corner of a room, for example, the operator can adjust the angle and so forth of the imaging unit while checking the installation situation without having to wrapping himself around the back side of the monitoring apparatus (the side opposite the imaging unit and intrusion detection sensor). Therefore, the installation situation of the monitoring apparatus can be checked quickly and easily.

In a monitoring apparatus according to one aspect, the intrusion detection sensor is arranged adjacent the imaging unit. By such a configuration, the imaging unit and intrusion detection sensor are arranged and perform their respective functions in substantially the same position with respect to the monitoring area, and therefore, the range that can be detected by the intrusion detection sensor can be precisely overlaid on the image of the monitoring area taken by the imaging unit because there is not a large deviation between the respective viewpoints of the imaging unit and intrusion detection sensor.

A monitoring apparatus according to one aspect is configured such that, for a prescribed time before a monitoring operation is started, the display unit displays the range that can be detected by the intrusion detection sensor overlaid on an image of the monitoring area, and the monitoring operation is started after the prescribed time has elapsed. By such a configuration, the user (operator) can check the installation situation of the monitoring apparatus using the prescribed time. Also, since the user can get outside the monitoring area within the prescribed time after he checks the installation situation, he can avoid being mistakenly detected by the intrusion detection sensor after the start of the monitoring operation.

A monitoring apparatus according to the above aspect further includes a power detection unit that detects whether the monitoring apparatus is driven by battery or by receiving an external supply of power, wherein the monitoring apparatus is configured such that, before a monitoring operation is started, if the power detection unit detects that the monitoring apparatus is driven by receiving an external supply of power, the display unit displays the range that can be detected by the intrusion detection sensor overlaid on an image of the monitoring area. By such a configuration, the user (operator) can check the installation situation of the monitoring apparatus before the monitoring operation begins only in the case where the monitoring apparatus is being driven by receiving an external supply of power. Also, it is possible to easily avoid performing the monitoring operation and preparation for it in the state where driven by battery.

In this case, the monitoring apparatus may be configured such that if the power detection unit detects that the monitoring apparatus is not driven by receiving an external supply of power, the display unit displays a message that requests external supply of power rather than displaying the range that can be detected by the intrusion detection sensor overlaid on an image of the monitoring area. By such a configuration, when preparing for the monitoring operation, the user (operator) can immediately recognize that an external supply of power to the monitoring apparatus is required.

A monitoring apparatus according to one aspect is a portable terminal device configured so as to be capable of a monitoring operation of the monitoring area. When monitoring for intruders using a portable terminal device that can be carried by an operator, it tends to be necessary to frequently adjust the installation location or installation orientation (orientation of the imaging unit, etc.) of the portable terminal device (monitoring apparatus). In such cases, since the range that can be detected by the intrusion detection sensor is displayed overlaid on an image of the monitoring area, it can be checked by a simple means whether or not the installation situation of the portable terminal device is appropriate.

### [Brief Description of the Drawings]

FIG. 1 is a front view of a portable terminal device according to an embodiment of the present invention, as seen from the front side.
FIG. 2 is an oblique view illustrating an example of the usage state of a portable terminal device according to an embodiment of the present invention.
FIG. 3 is an oblique view illustrating another example of the usage state of a portable terminal device according to an embodiment of the present invention.
FIG. 4 is an oblique view illustrating another example of the usage state of a portable terminal device according to an embodiment of the present invention.
FIG. 5 is a block diagram illustrating the control configuration of a portable terminal device according to an embodiment of the present invention.
FIG. 6 is a figure which schematically illustrates a configuration in which the range that can be detected by the person sensor is displayed overlaid on an image of the monitoring area in a portable terminal device according to an embodiment of the present invention.
FIG. 7 is a figure which illustrates the contents of a message screen displayed on the display unit before the monitoring operation is started in a portable terminal device according to an embodiment of the present invention.
FIG. 8 is a figure which illustrates a configuration in which the range that can be detected by the person sensor is displayed on a display unit overlaid on an image of the monitoring area in a portable terminal device according to an embodiment of the present invention.
FIG. 9 is a figure which illustrates the control process flow of the control unit when starting the monitoring operation using a portable terminal device according to an embodiment of the present invention.

### [Detailed Description of the Invention]

Below, specific embodiments of the present invention will be described based on the drawings.

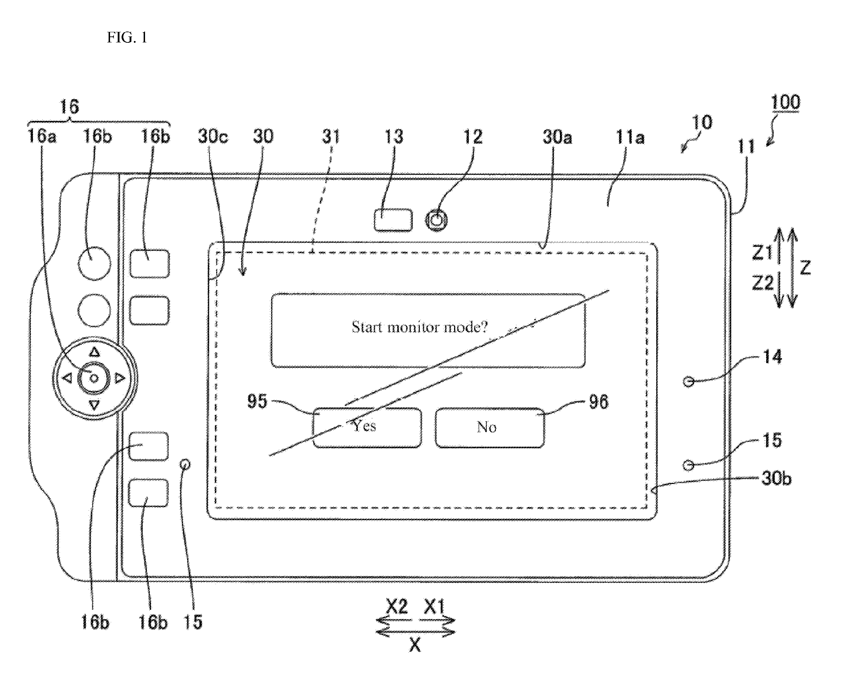

First, the configuration of a portable terminal device 100 according to an embodiment of the present invention will be described in reference to FIGS. 1-8. Note that the portable terminal device 100 is an example of the "monitoring apparatus" of the present invention.

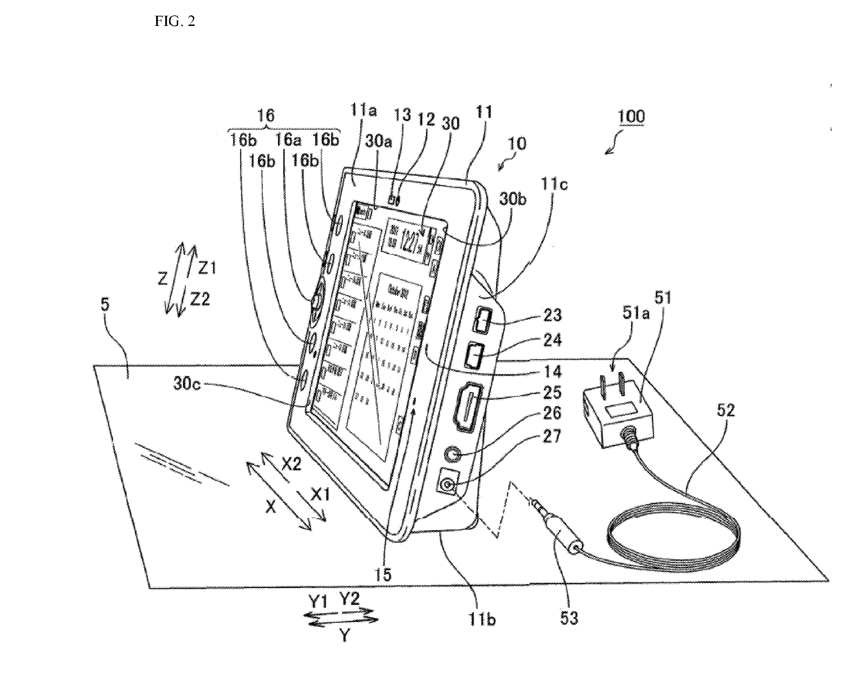

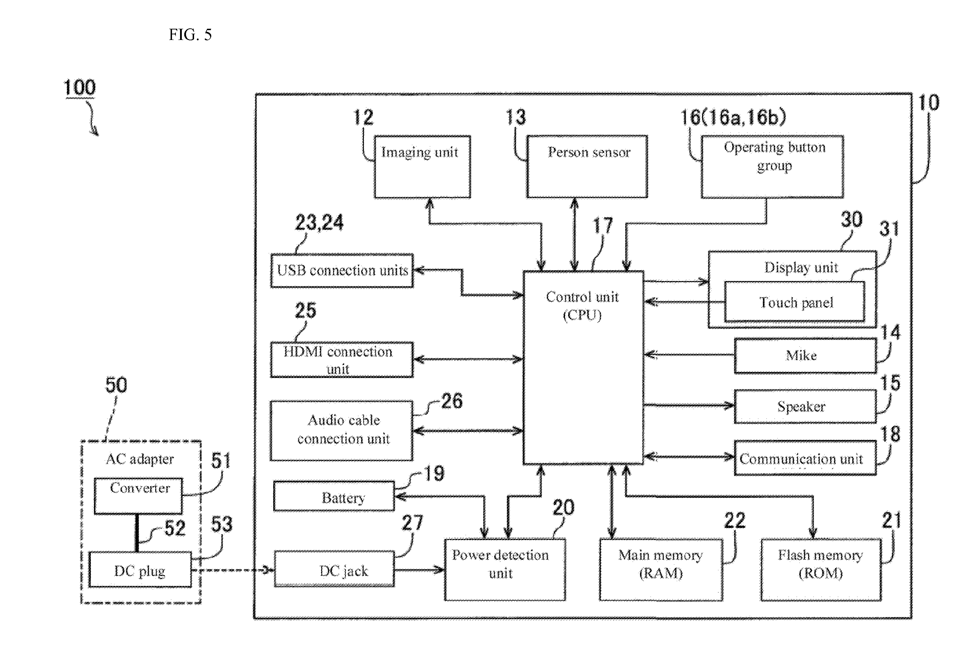

As shown in FIG. 1, the portable terminal device 100 according to an embodiment of the present invention has a device body 10 having a shape and weight that can be easily carried by a user (operator). Also, as shown in FIG. 2, the portable terminal device 100 is configured such that it can be driven not only by a built-in battery 19 (refer to FIG. 5), but can also be driven by receiving an external supply of power such as from a residential outlet (not shown in diagram) by connecting an AC adapter 50 to the device body 10.

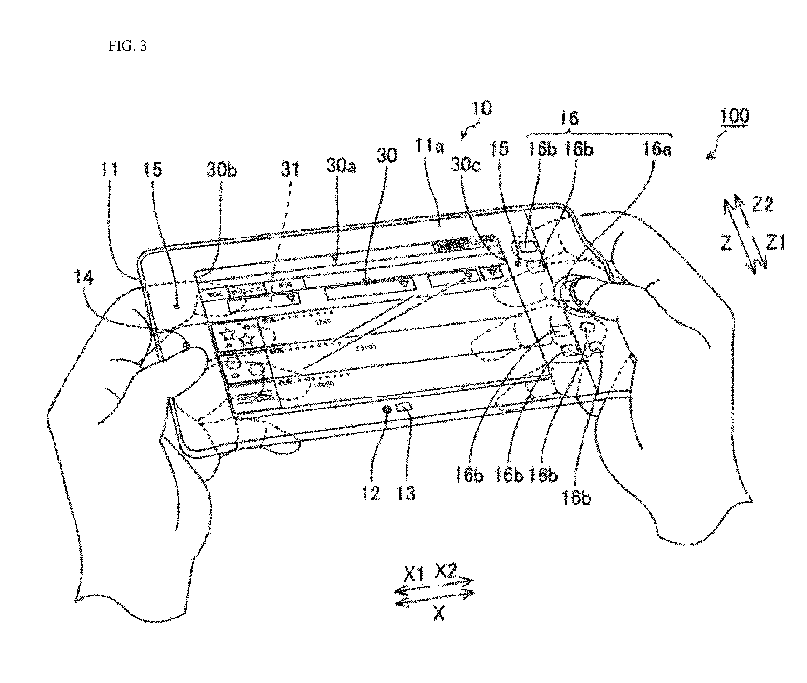

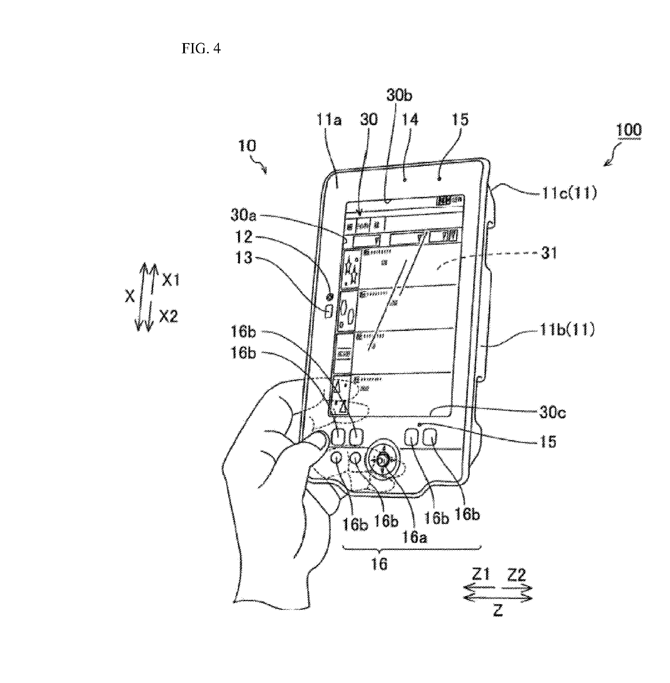

As shown in FIG. 1, the device body 10 contains a case 11 formed in a prescribed shape, and a display unit 30 made up of an LCD (liquid crystal display) fit inside a frame part 11a on the front surface side of the case 11 (the Y1 side in FIG. 2). Therefore, the portable terminal device 100 is configured such that it can be held by the user in a horizontal orientation (refer to FIG. 3) or a vertical orientation (refer to FIG. 4), and such that it can also be used in the state where the device body 10 (display unit 30) is standing up by putting the base part 11b of the case 11 in contact with (opposing) a mounting surface 5, as shown in FIG. 2.

Furthermore, the device body 10 is configured such that it can connect to the Internet, so that the functions of reception and playback of streaming content, sending and receiving of email, video chat and voice chat can be used. Further, it is configured such that a calendar screen or clock screen or the like can be displayed by small applications (gadgets) in the state in which the device body 10 (display unit 30) is standing on the mounting surface 5 with the long direction (X direction) oriented horizontally (refer to FIG. 2). Thus, the portable terminal device 100 is configured such that various application software can be executed in accordance with the orientation used.

Additionally, as shown in FIG. 1 and FIG. 2, the device body 10 also includes an imaging unit 12 into which a CCD sensor or CMOS sensor (imaging element) is built in, a person sensor 13 which detects movement of a person or animal or the like using infrared light, a mike 14 which collects sound such as audio, a pair of speakers 15 which outputs audio, and an operating button group 16. Note that the person sensor 13 is an example of the "intrusion detection sensor" of the present invention.

Here, in this embodiment, the imaging unit 12 and person sensor 13 are both arranged in part of the frame part 11a that supports one side (Z1 side) of the display unit 30. In further detail, the imaging unit 12 and person sensor 13 are arranged in a frame part 11a more to the outside (Z1 side) than the edge part 30a that extends in the horizontal direction (X direction) of the display unit 30. Further, the imaging unit 12 and person sensor 13 are arranged adjacent to each other in the X direction. In this case, the imaging unit 12 is arranged slightly to the X1 side of substantially the center of the frame part 11a that extends in the X direction, and the person sensor 13 is arranged near the X2 side of the imaging unit 12.

The operating button group 16 includes one cursor key 16a and a plurality of button keys 16b. The buttons (keys) are arranged in a prescribed layout in the region of the frame part 11a, from the edge part 30c on the other side (X2 side) of the display unit 30 to the outer edge part (X2 side) of the case 11. When the user operates the portable terminal device 100, as shown in FIG. 3, he moves the cursor displayed on the display unit 30 while sliding the cursor key 16a in the up, down, left and right directions to select from a plurality of button images and screens, and presses the cursor key 16a at that position. As a result, the user's decision is reflected in operation of application software. Further, it is configured such that the application software can be discontinued (ended) or switched by means of the user pressing any of a plurality of button keys 16b. For example, it may be configured such that the application software for performing the intruder monitoring operation can be started by pressing a button key 16b of a prescribed position.

As shown in FIG. 1, an electrostatic capacitance-type touch panel 31 (inside of dashed line frame) is built into the display unit 30. As a result, in the application software executed by the portable terminal device 100, the user's decision can be reflected in the operation of the application software also by means of a finger or the like touching a part of the touch panel 31 corresponding to, for example, button screens 95 and 96 and so forth displayed in the display unit 30, by means of the user applying pressure to operate the operating button group 16.

Furthermore, as shown in FIG. 5, a control unit 17 consisting of a CPU, a communication unit 18 for the device body 10 to perform wireless communication with external devices (not shown) such as a router, a battery (secondary battery) for driving the device body 10 in cases where the AC adapter 50 is not used, a power detection unit 20 which detects whether the AC adapter 50 is connected, a flash memory (ROM) 21, and a main memory (RAM) 22 are built into the device body 10.

The control unit 17 has the function of governing control of the device body 10. In the flash memory 21, control programs and so forth executed by the control unit 17 are stored. The main memory 22 is used as working memory which temporarily saves control parameters used when the control programs are being executed.

In this embodiment, because the portable terminal device 100 is configured as described above, in addition to the fact that the portable terminal device 100 executes application software when directly operated by the user, it is configured such that when the user is absent, it can execute the operations of monitoring and recording persons who intrude within a prescribed area using the portable terminal device 100. That is, it is configured such that, by the device body 10 being installed in a prescribed location by adjusting the orientation (left/right directions) and angle (up/down directions), it can automatically perform monitoring of intruders (mainly people) when the user is absent by the imaging unit 12 and person sensor 13 being operated.

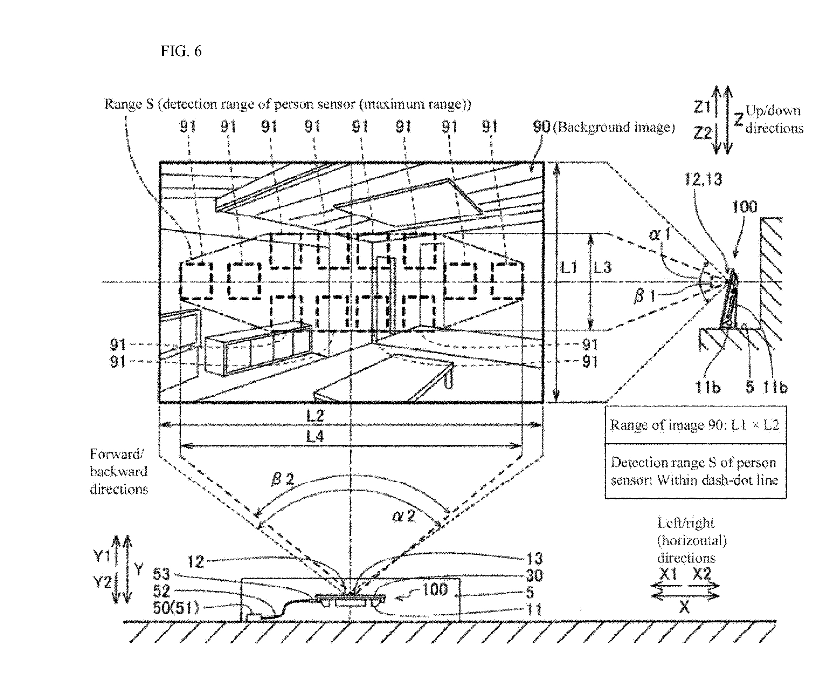

For example, in the embodiment shown in FIG. 2, the device body 10 is configured so as to monitor the room while installed on a shelf on the wall of the room or on a base in a corner of the room. In this case, the long direction (X direction) of the device body 10 is installed on a mounting surface 5 substantially horizontally, and the imaging unit 12 and person sensor 13 are arranged adjacent to each other in the horizontal direction (X direction) on the top side (Z1 side) from the display unit 30. While the monitoring operation is being executed, the person sensor 13 arranged facing the inside of the room detects intruders into the monitoring area (inside the room), and the imaging unit 12, which similarly faces the inside of the room, images the situation of the monitoring area that contains an intruder based on motion detected by the person sensor 13. Note that images 90 of the monitored area (refer to FIG. 6) taken by the imaging unit 12 may also include movies (in video data format) of the status while the intruder is moving, recorded in real time.

As shown in FIG. 6, the imaging unit 12 has a prescribed imaging range and images the monitoring area. In this case, the imaging unit 12 has a viewing angle α1 in the up/down directions (Z direction), and has a viewing angle α2 in the left/right directions (X direction). As a result, the image 90 taken of the monitoring area in the room is taken in the range having the dimensions L1 in the up/down directions and L2 in the left/right directions. The person sensor 13 has a detection angle β1 (β1 < α1) in the up/down directions (Z direction) and a detection angle β2 (β2 < α2) in the left/right directions (X direction). As a result, the range S of the person sensor 13 in which a person (intruder) can be detected has dimensions of L3 (maximum width) in the up/down directions and L4 (maximum width) in the left/right directions.

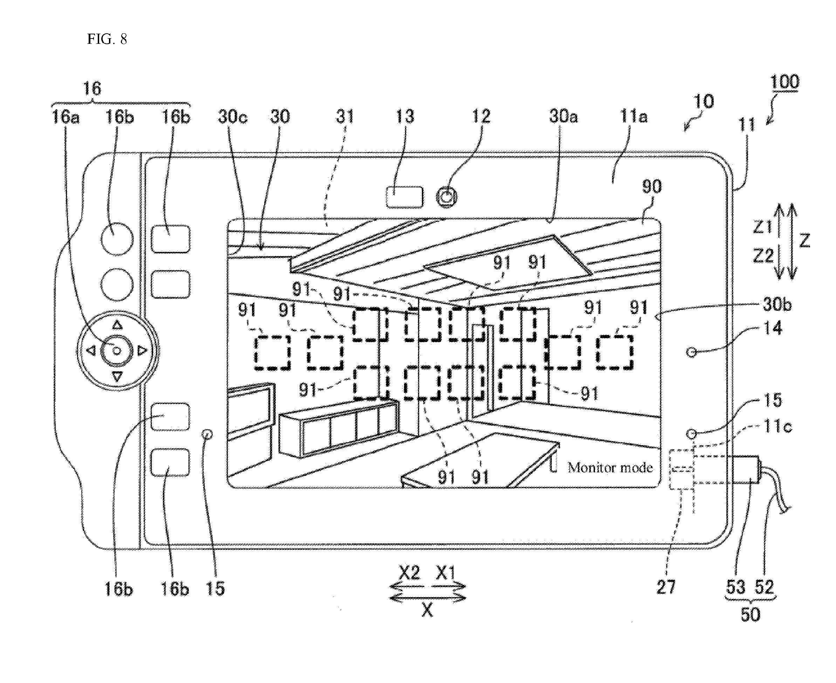

This embodiment is configured such that the range S that can be detected by the person sensor 13 (refer to FIG. 6) is displayed on the display unit 30 overlaid on the image 90 of the monitoring area taken by the imaging unit 12. That is, for the specific displayed content, in addition to the image of the monitoring area taken by the imaging unit 12 (background image), a plurality of marks 91 (twelve of them in this embodiment) for schematically indicating the range S that can be detected by the person sensor 13 (refer to FIG. 6) are displayed together with the image 90 on the display unit 30, as shown in FIG. 8 (this does not mean that the range S shown in FIG. 6 is displayed). Note that due to the fact that the plurality of marks 91 is overlaid on the image 90 with the layout shown in FIG. 8, it is configured such that the region surrounded by the plurality of marks 91 (region inside range S in FIG. 6) is recognized by the user as the range that can be detected by the person sensor. Note that the plurality of marks 91 are an example of the "range that can be detected by the person sensor" of the present invention.

The marks 91 each have a square frame shape and are displayed in a color (for example, bright red) that differs from the background image 90. Note that in FIG. 8, the marks 91 are illustrated using thick dashed lines so that they can be distinguished from the image 90. Therefore, when the user adjusts the orientation of the device body 10 based on the status shown in FIG. 8, the background image 90 being taken by the imaging unit 12 is shifted up, down, left and right according to the orientation of the imaging unit 12, while the plurality of marks 91 are always displayed in a state fixed within the range S (refer to FIG. 6) on the display unit 30. As a result, since the position of each mark 91 is always placed on the background image 90, the user can recognize in real time whether or not the position at which the marks 91 are placed is appropriate as a viewpoint (monitoring range).

In this embodiment, as shown in FIG. 6, the range S (inside the dot-dash line frame) that can be detected by the person sensor 13 indicated by the plurality of marks 91 is smaller than the range that can be imaged by the imaging unit 12 taken as the image 90 (of size L1 × L2). In this case, L3 < L1, and L4 < L2. Therefore, the range S that can be detected by the person sensor 13 does not protrude from the image 90 either in the up/down directions or left/right directions, and all (twelve) of the plurality of marks 91 are displayed at once.

Further, in this embodiment, the user installs the device body 10 in a prescribed location, and before actually starting the intruder monitoring operation, the range S (plurality of marks 91) that can be detected by the person sensor 13 is displayed on the display unit 30 overlaid on the image 90 for a time T1 (for example, approximately 1 minute). As a result, the user can check the orientation and angle (left/right directions, up/down directions) of the installed device body 10 in this time T1. Also, since the range S that can be detected by the person sensor 13 is displayed overlaid on the image 90 during this time T1, the user can also adjust the orientation of the device body 10 while looking at the display unit 30, which faces the monitoring area (inside the room), straight on or at an oblique angle. Further, after checking the installation situation, after time T1 elapses, the display of the image 90 and plurality of marks 91 is erased from the display unit 30, and the intruder monitoring operation is actually started.

Furthermore, as shown in FIG. 2, USB connection units 23 and 24, an HDMI connection unit 25, an audio cable connection unit 26 and a DC jack 27 are provided on the side face 11c on the X1 side of the case 11.

Also, the AC adapter 50 has a plug 51 a which can be plugged into a residential outlet (not shown in drawings), and includes a converter 51 which switches AC power to DC power, a power cable 52 which extends from the converter 51, and a DC plug (connection terminal) 53 provided on the end of the power cable 52. Therefore, by plugging the DC plug 52 into the DC jack 27 of the side face (side face 11c) of the device body 10, an external supply of power (from a residential outlet) can be received.

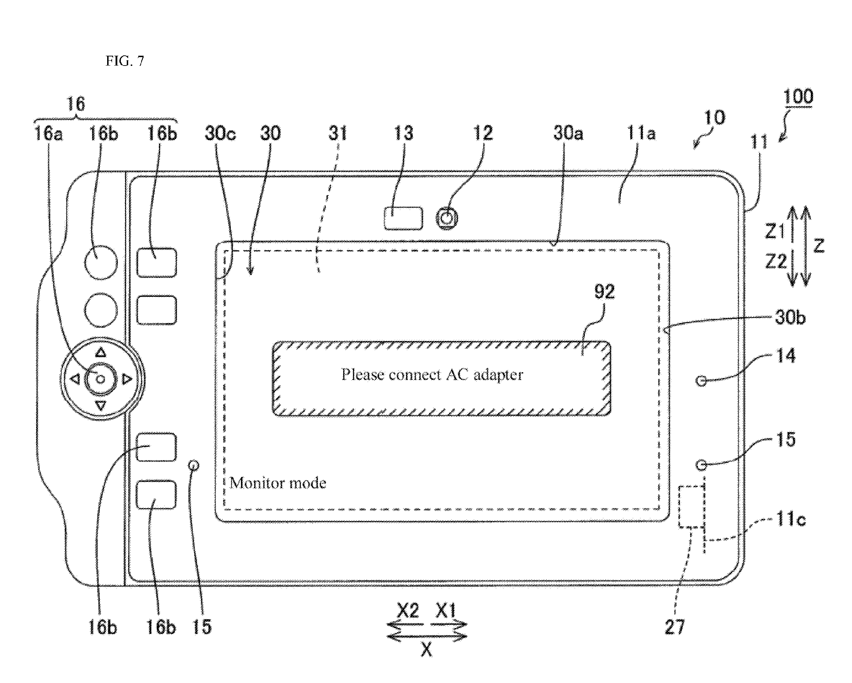

Here, in this embodiment, before the intruder monitoring operation is actually started, if it is detected by the power detection unit 20 (refer to FIG. 5) that the device body 10 is being driven by receiving an external supply of power (if the AC adapter 50 is connected to the device body 10), the plurality of marks 91 which indicate the range S that can be detected by the person sensor 13 (refer to FIG. 6) are displayed on the display unit 30 overlaid on the image 90, as shown in FIG. 8. On the other hand, if it is detected by the power detection unit 20 (refer to FIG. 5) that the device body 10 is not being driven by receiving an external supply of power (if the AC adapter 50 is not connected to the device body 10), the plurality of marks 91 is not displayed overlaid on the image 90, and a message screen requesting an external supply of power, "Please connect AC adapter" is displayed on the display unit 30, as shown in FIG. 7. When the user connects the AC adapter 50 into the device body 10 after being prompted by this request message, the display unit 30 immediately switches to the status shown in FIG. 8.

In the state in which the AC adapter 50 is connected to the device body 10, the monitoring operation is executed using the portable terminal device 100, and charging of the built-in battery 19 is also performed at the same time. If the person sensor 13 detects an intruding person (intruder) during execution of the monitoring operation, the imaging unit 12 immediately takes an image of the monitoring area and saves it in the main memory 22 (refer to FIG. 5). Additionally, depending on the device settings of the device body 10, the image of the monitoring area taken by the imaging unit 12 is sent via the communication unit 18 to another terminal device (not shown in drawings) connected to a network. Thus, the portable terminal device 100 is configured as the monitoring apparatus according to this embodiment.

Next, the control process flow of the control unit 17 when the monitoring operation by the portable terminal device 100 according to this embodiment is started will be described in reference to FIG. 1, FIG. 2, FIG. 5 and FIGS. 7-9. Note that the description below describes control operations of the device body 10 assuming that application software for performing the monitoring operation has been started up by the user in the state where the portable terminal device is 100 being driven by the battery 19 (refer to FIG. 5).

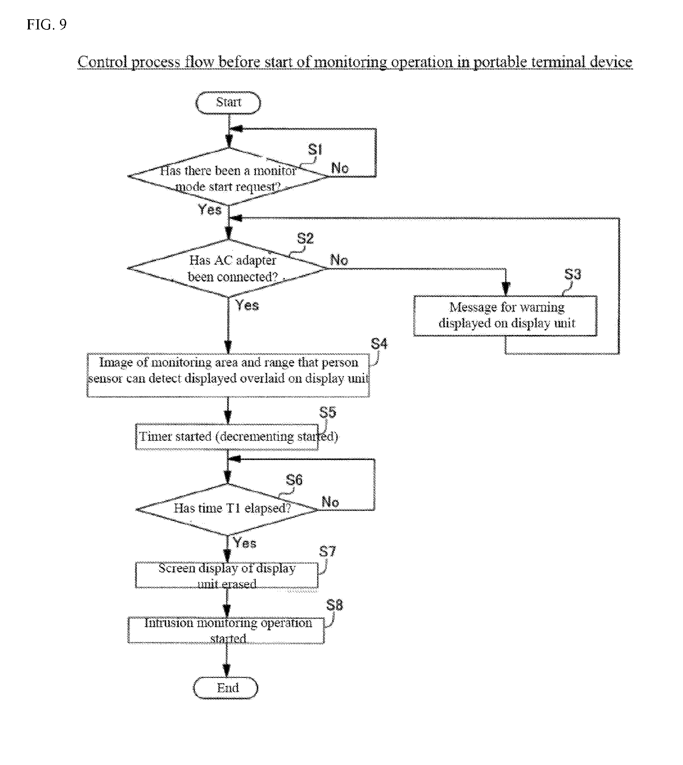

As shown in FIG. 9, first, in step S1, the control unit 17 (refer to FIG. 5) judges whether or not there has been a monitor mode start request, and repeats this process until it judges that there is a monitor mode start request. This monitor mode start request is judged as "yes" based on detection of the button screen 95 on the display unit 30 being pressed by the user, which starts monitor mode in the state where the application software for performing the intruder monitoring operation has been started up by means of a button key 16b in a prescribed position being pressed once by the user.

If it is judged that there has been a monitor mode start request in step S1, in step S2 as shown in FIG. 9, the control unit 17 judges whether or not external power is being supplied to the device body 10. That is, the power detection unit 20 (refer to FIG. 5) detects whether or not the AC adapter 50 (refer to FIG. 2) is connected to the device body 10. Note that the state in which the AD adapter 50 is connected to the device body 10 means the state in which the plug 51a (refer to FIG. 2) of the converter 51 (refer to FIG. 2) is plugged into a residential outlet (not shown) and the DC plug 53 (refer to FIG. 2) is plugged into the DC jack 27 (refer to FIG. 2) of the device body 10.

In step 2, if, based on the detection result of the power detection unit 20, the controller 17 judges that external power is not being supplied (the AC adapter 50 is not connected to the device body 10 and the device body 10 is being driven by the battery 19 (refer to FIG. 5)), in step S3, as shown in FIG. 7, the message screen 92 which alerts the user "Please connect AC adapter" is displayed on the display unit 30, and the process returns to the judgment of step S2. That is, the message screen 92 requesting an external supply of power, "Please connect AC adapter," is displayed on the display unit 30 until the AC adapter 50 is connected to the device body 10.

In step S2, if, based on the detection result of the power detection unit 20, it is judged that external power is being supplied (the AC adapter is connected to the device body) ("Yes" judgment), the process moves to step S4.

In this embodiment, in step S4, the plurality of marks 91 (refer to FIG. 8) which indicate the range that can be detected by the person sensor 13 are displayed on the display unit 30 overlaid on the image 90 of the room being taken by the imaging unit 12. As a result, the user can check the installation situation of the device body 10 while looking at the display unit 30, which faces the monitoring area (inside of the room), straight on or at an oblique angle.

Then, in step S5, the timer function provided in the control program executed by the control unit 17 is executed. That is, together with the start of the display operation in step S4, decrementing of the prescribed time T1 (for example, 1 minute) is started. During this time, the user can appropriately adjust the orientation of the device body 10 while looking at the display unit 30 which faces the monitoring area (inside of the room) because the range that can be detected by the person sensor 13 (plurality of marks 91) continues to be displayed overlaid on the image 90.

Then, in step S6, it is judged whether or not time T1 has elapsed, and this judgment is repeated until time T1 has elapsed. In step S6, when it is judged that time T1 has elapsed, the process moves to step S7, where the entire screen (all images) displayed on the display unit 30 is erased by the control unit 17. Then, in step S8, the monitoring operation by the imaging unit 12 and person sensor 13 is actually executed, and this control process ends.

In this embodiment, as described above, there is a display device 30 which displays a plurality of (twelve) marks signifying the range S that can be detected by the person sensor 13 overlaid on the image 90 of the monitoring area taken by the imaging unit 12. As a result, since the twelve marks 91 are displayed overlaid on the image 90 of the monitoring area, the user can easily check whether or not the installation situation of the portable terminal device 100 (device body 10) installed in a prescribed location is appropriate for the monitoring operation.

Furthermore, in this embodiment, the range S that can be detected by the person sensor 13 in the monitoring area indicated by the plurality of (twelve) marks 91 is smaller than the imaging range of the monitoring area that can be imaged by the imaging unit 12 (range of L1 × L2 in FIG. 6 = size of image 90). As a result, the plurality of (twelve) marks 91 which signify the range S that can be detected by the person sensor 13 can be reliably displayed on the display unit 30 overlaid within the image 90 without protruding from the image 90 of the monitoring area taken by the imaging unit 12. Therefore, the user (operator) can reliably check the twelve marks 91 on the display unit 30.

Also, in this embodiment, the twelve marks 91 which signify the range S that can be detected by the person sensor 13 each have a square frame shape and are displayed in a color (for example, bright red) that differs from the background image 90. As a result, the user can accurately check the installation situation of the portable terminal device 100 because each of the twelve marks 91 is displayed on the display unit in a state that is distinguished from the image 90.

Furthermore, in this embodiment, when the operator checks the installation situation of the portable terminal device 100, he can check it via the display unit 30 on the side on which the imaging unit 12 and person sensor 13 are arranged because the imaging unit 12 and person sensor 13 are arranged on the same side as the side on which the display unit 30 is arranged. That is, when the portable terminal device 100 is installed in a small and inconspicuous location such as on a wall or in a corner of a room, the operator can adjust the angle and so forth of the imaging unit 12 while checking the installation situation without having to wrapping himself around the back side of the device body 10 (the side opposite the imaging unit 12 and person sensor 13). Therefore, the user can check the installation situation of the portable terminal device 100 quickly and easily.

Also, in this embodiment, due to the fact that the person sensor 13 is arranged near the imaging unit 12 (near the X2 side of the imaging unit 12 in FIG. 1), the imaging unit 12 and person sensor 13 are arranged and perform their respective functions in substantially the same position with respect to the monitoring area. That is, the plurality of marks 91 (range S that can be detected by the person sensor 13) can be precisely overlaid on the image 90 taken by the imaging unit 12 because there is not a large deviation between the respective viewpoints (observation points) of the imaging unit 12 and person sensor 13 in the X direction (horizontal direction) and Z direction (vertical direction).

Further, in this embodiment, for time T1 (approximately 1 minute) before the intruder monitoring operation is started, the display unit 30 displays the plurality of (twelve) marks 91 overlaid on the image 90. Also, it is configured such that the intruder monitoring operation is started after time T1 (approximately 1 minute) has elapsed. As a result, the user can check the installation situation of the portable terminal device 100 using this time T1. Also, since the user can get outside the monitoring area within the prescribed time after he checks the installation situation, he can avoid being mistakenly detected by the person sensor 13 after the start of the monitoring operation.

Further, this embodiment has a power detection unit 20 which detects whether it is driven by the battery 19 or is driven by receiving an external supply of power (AC adapter 50), and is configured such that, before the monitoring operation is started, if it was detected by the power detection unit 20 that it is driven by receiving an external supply of power, the display unit displays the plurality of (twelve) marks 91 overlaid on the image 90. As a result, the user can check the installation situation of the portable terminal device 100 before the monitoring operation begins only in the case where the portable terminal device 100 is being driven by receiving an external supply of power. Also, it is possible to easily avoid performing the monitoring operation and preparation for it in the state where driven by the battery 19.

Also, this embodiment is configured such that if the power detection unit 20 detects that it is not driven by receiving an external supply of power (AC adapter 50), the display unit displays a message that requests external supply of power rather than displaying the plurality of (twelve) marks 91 overlaid on the image 90. As a result, when preparing for the monitoring operation, the user can immediately recognize that an external supply of power to the portable terminal device 100 is required.

Furthermore, in this embodiment, the monitoring operation of the monitoring area is performed using a portable terminal device 100. When the intruder monitoring operation is performed using a portable terminal device 100 that can be carried by an operator, it tends to be necessary to frequently adjust the installation location or installation orientation (orientation of the imaging unit 12, etc.) of the device body 10. In such cases, since the plurality of marks 91 which indicate the range S that can be detected by the person sensor 13 are displayed overlaid on the image 90 of the monitoring area, it can be checked by a simple means whether or not the installation situation of the portable terminal device 100 is appropriate.

Note that in the embodiments disclosed here, all points are examples and should not be considered restrictions. The scope of the present invention is indicated by the claims rather than being described by the aforementioned embodiments, and includes all modifications within the scope and meaning equivalent to the claims.

For example, in the aforementioned embodiments, an example is shown configured such that the monitoring operation is performed with the device body 10 installed on the mounting surface 5 with the long direction (X direction) of the device body 10 horizontal, but the present invention is not limited thereto. In one or more embodiments of the present invention, the monitoring operation may also be performed with the device body 10 installed on the mounting surface 5 with the long direction (X direction) of the device body 10 vertical, as shown in FIG. 4. In this case, the case 11 may be configured such that the device body 10 is mounted directly on the mounting surface 5, and a cradle may also be installed on the mounting surface in the state in which the device body 10 (case 11) is affixed to a fixing apparatus like a cradle. Alternatively, the device body 10 may be installed on the mounting surface 5 of a table-top holder used when charging. Since a table-top holder is an accessory device that is electrically connected to the AC adapter 50, external power can be reliably supplied to the portable terminal device 100 when performing the monitoring operation. Even when configured in this manner, it can be easily checked whether or not the installation situation of the portable terminal device (device body 10) when mounted vertically is appropriate because the range that can be detected by the person sensor 13 can be displayed overlaid on the image 90 of the monitoring area taken by the imaging unit 12.

The above embodiment is a case configured such that when it is detected by the power detection unit 20 that the device body 10 is being driven by receiving an external supply of power (the state where the AC adapter 50 is connected to the device body 10), a plurality of marks 91 indicating the range S that can be detected by the person sensor 13 are displayed on the display unit 30 overlaid on the image 90 and then the subsequent monitoring operation is executed, but the present invention is not limited thereto. Considering that the performance of batteries 19 is improved year by year, one or more embodiments of the present invention may also be configured such that even if powered by the battery 19 alone, the marks 91 are displayed overlaid on the image 90 before the start of monitoring and then the subsequent monitoring operation is executed. In this case, the limit on the time of continuous monitoring operation is set in accordance with the remaining amount of battery 19. It may also be configured such that the user can select/decide to set the limit on the time of continuous monitoring operation via the display unit 30. Further, one or more embodiments of the present invention can be configured such that even if the AC adapter 50 is connected to the device body 10, it is operated as appropriate based on an order of priority of driving the monitoring operation by battery or driving it by an external power supply depending on the remaining amount of battery 19. The priority order may be judged automatically or may be set by the user beforehand.

The above embodiment is a case configured such that the range that can be detected by the person sensor 13 is displayed on the display unit 30 using a plurality of marks 91, but the present invention is not limited thereto. In one or more embodiments of the present invention, one large mark that indicates the range that can be detected by the person sensor 13 (for example, the range S made up of the dash-dot line frame shown in FIG. 6) may be used. Further, the marks 91 each have a square shape in the above embodiment, but they are not limited thereto, and may also have a shape that is visible other than a square frame. The color of the marks 91 may also be any visible color other than bright red. Additionally, they may be displayed illuminated or blinking. If displayed blinking, the blinking pattern does not matter.

The above embodiment is a case configured such that the range S that can be detected by the person sensor 13 indicated by a plurality of marks 91 (inside the dot-dash line frame in FIG. 6) is smaller than the range that can be imaged by the imaging unit 12 taken as the image 90 (size of L1 × L2), but the present invention is not limited thereto. In one or more embodiments of the present invention, the range S indicated by the plurality of marks 91 may also be substantially the same size as the range that can be imaged by the imaging unit 12 (size of L1 × L2).

The above embodiment is a case configured such that the imaging unit 12 and person sensor 13 are arranged adjacent to each other in the horizontal direction (X direction) in the state shown in FIG. 1 and FIG. 2, but the present invention is not limited thereto. In one or more embodiments of the present invention, the imaging unit 12 and person sensor 13 may also be arranged adjacent to each other in the vertical direction (Z direction). In this case, the imaging unit 12 is arranged in substantially the center of the frame part 11a that extends in the X direction and the person sensor 13 is arranged nearby slightly above (Z1 side) or below (Z2 side) the imaging unit 12.

The above embodiment is a case configured such that the plurality of marks 91 that indicate the range that can be detected by the person sensor 13 are displayed on the display unit 30 overlaid on the image 90 for approximately 1 minute (time T1), but the present invention is not limited thereto. In one or more embodiments of the present invention, time T1 can also be shorter than 1 minute. The length of time may also be set as appropriate in accordance with the operating skill of the user (whether or not he is accustomed to performing installation and preparation).

The above embodiment is a case in which a person sensor 13 that detects movement of people or animals using infrared light is used, but the present invention is not limited thereto. A person sensor that detects movement of people or animals that intrude in the monitoring area using ultrasonic echo or the like may also be used.

The above embodiment is a case in which a person sensor 13 that detects living bodies such as people or animals using infrared light is used, but the present invention is not limited thereto. In one or more embodiments of the present invention, a sensor capable of detecting intrusion into the monitoring area by living bodies or things other than living bodies such as, for example, a self-propelled robot or the like, may be provided in the device body 10 and used as the "intrusion detection sensor" of the present invention.

In the above embodiment, the control process of the control unit 17 was described using a flow-driven flowchart of the processes performed in order according to the process flow, but the present invention is not limited thereto. In one or more embodiments of the present invention, the control process of the control unit 17 may also be performed by an event-driven process that executes processes in event units. In this case, it can be completely event-driven or can be a combination of event-driven and flow-driven.

### [Description of Reference Numerals]

| | |
|---|---|
| 12 | Imaging unit |
| 13 | Person sensor (intrusion detection sensor) |
| 19 | Battery |
| 20 | Power detection unit |
| 30 | Display unit |
| 90 | Image (image of monitoring area) |
| 91 | Marks (range that can be detected by person sensor) |
| 92 | Message screen (message) |
| 100 | Portable terminal device (monitoring apparatus) |

## Claims

1. A monitoring apparatus (100) comprising:
an imaging unit (12) that takes an image (90) of a monitoring area;
an intrusion detection sensor (13) that detects intrusion into the monitoring area; and
a display unit (30) that displays a range that can be detected by the intrusion detection sensor overlaid on an image of the monitoring area taken by the imaging unit, wherein
the range that can be detected by the intrusion detection sensor in the monitoring area is less than or equal to an imaging range of the monitoring area that can be imaged by the imaging unit.

2. The monitoring apparatus according to claim 1, configured such that the range that can be detected by the intrusion detection sensor is displayed on the display unit overlaid on an image of the monitoring area taken by the imaging unit in a format that includes a shape and/or color that can be visually identified by an operator.

3. The monitoring apparatus according to claim 1 or 2, wherein the imaging unit, the intrusion detection sensor, and the display unit are arranged on a same side of the monitoring apparatus.

4. The monitoring apparatus according to any of claims 1 to 3, wherein the intrusion detection sensor is arranged adjacent the imaging unit.

5. The monitoring apparatus according to any of claims 1 to 4, configured such that:
for a prescribed time before a monitoring operation is started, the display unit displays the range that can be detected by the intrusion detection sensor overlaid on an image of the monitoring area, and
the monitoring operation is started after the prescribed time has elapsed.

6. The monitoring apparatus according to any of claims 1 to 5, further comprising a power detection unit (20) that detects whether the monitoring apparatus is driven by battery or by receiving an external supply of power, wherein
the monitoring apparatus is configured such that, before a monitoring operation is started, if the power detection unit detects that the monitoring apparatus is driven by receiving an external supply of power, the display unit displays the range that can be detected by the intrusion detection sensor overlaid on an image of the monitoring area.

7. The monitoring apparatus according to claim 6, configured such that, if the power detection unit detects that the monitoring apparatus is not driven by receiving an external supply of power, the display unit displays a message that requests external supply of power rather than displaying the range that can be detected by the intrusion detection sensor overlaid on an image of the monitoring area.

8. The monitoring apparatus according to any of claims 1 to 7, wherein the monitoring apparatus is a portable terminal device configured so as to be capable of a monitoring operation of the monitoring area.
